# EUROPEAN PATENT APPLICATION

(11) **EP 4 472 104 A1**
(43) Date of publication of application: **04.12.2024**
(21) Application number: 24305789.0
(22) Date of filing: 22.05.2024
(51) Int. Cl.: H04B 7/185, H04B 7/06

(54) **METHODS, TERMINALS AND SYSTEM TO COMMUNICATE WITH A TELECOMMUNICATION SATELLITE**

(30) Priority: 30.05.2023 WO PCT/CN2023/097047
(71) Applicant: Orange, 92130 Issy-les-Moulineaux (FR)
(72) Inventor: WANG, Xiaoyu (Richard), Beijing, 100013 (CN)
(74) Representative: Cabinet Beau de Loménie

(57) **Abstract**

A data processing method implemented by a first terminal belonging to a set of terminals including at least one other terminal. Said method comprises the steps of:
- transmitting (E50_s) guidance data to said at least one other terminal, said guidance data being configured to guide users of said terminals in adjusting their respective positions, so that said set of terminals forms a virtual antenna array configured to generate data transmission beams directed to a telecommunication satellite,
- once the positions of the terminals are adjusted, selection (E70_s) of at least one data transmission beam to communicate with the satellite from beams that the virtual antenna array is capable of generating, said at least one selected beam satisfying a selection criterion referred to as "communication performance criterion".

## Description

### Field of the Invention

The present invention relates to the general field of telecommunications. It relates more particularly to data processing methods for establishing the conditions for communication with a telecommunication satellite and to terminals configured to implement such methods. The invention also relates to a data processing system that includes such terminals, as well as a method of communication with a telecommunication satellite implemented by this system. The invention finds a particularly advantageous application, although not limiting, in emergency situations where terrestrial communication systems are limited or even no longer effective.

### Technical Background

In emergency situations, there is often a vital need for communication services such as voice, video or useful data.

For example, in case of disasters (cyclone, flood, etc.), it is important to establish communications in order to set up the appropriate logistics so as to provide assistance to the population.

According to another example, one or more people in a group may need medical assistance while being in an isolated geographical area, such as in the case of a mountain hike.

In these emergency situations, terrestrial communication networks are often very limited (no cell phone coverage) and/or have often been destroyed, overflown or are no longer effective. This is why considerable interest has focused on telecommunication satellite links as a mean to provide secure communications in these situations.

Recently, it has been proposed to equip mobile terminals, including smartphones, with a functionality to transmit short messages via telecommunication satellite, so as to be able to contact help in the exceptional circumstances of an emergency situation.

Although this solution tends to provide acceptable results, it cannot be considered as very efficient since it is limited to the one-way transmission (i.e. from the earth surface to a telecommunication satellite) of predefined short messages. This solution also suffers from the fact that establishing a communication with a telecommunication satellite is often difficult to implement, requiring a tedious, time-consuming and repeated search for a suitable location by the user of a terminal in need of assistance.

It should be noted that the above-mentioned aspects (establishment of a communication between the earth surface and a telecommunication satellite) are of course not limited to the case of emergency situations, but can also concern other situations, such as traditional communication situations (e.g. cell phone coverage) for which additional means of communication are sought.

### Summary of the Invention

The purpose of the present invention is to overcome all or some of the limitations of the prior art, particularly those outlined here above, by providing a solution for establishing communication between terminals on the earth's surface and a telecommunication satellite in a more efficient way than prior art solutions.

By "more efficient", one refers here to a solution with reduced implementation complexity that allows for bi-directional communication with a telecommunication satellite, so that the transmission of any type of message between terrestrial terminals and the telecommunication satellite is enabled, especially in situations where conventional radio communication is not available.

To this end, and according to a first aspect, the invention relates to a data processing method implemented by a first terminal belonging to a set of terminals including at least one other terminal. Said method comprises the steps of:
- transmitting guidance data to said at least one other terminal, said guidance data being determined using communication capacity data of said at least one other terminal and being configured to guide users of said terminals in adjusting their respective positions, so that said set of terminals forms a virtual antenna array configured to generate data transmission beams directed to a telecommunication satellite,
- once the positions of the terminals are adjusted, selection (E70_s) of at least one data transmission beam to communicate with the satellite from beams that the virtual antenna array is capable of generating, said at least one selected beam satisfying a selection criterion referred to as "communication performance criterion".

Thus, the data processing method according to the invention, as implemented by the first terminal, allows taking advantage of the presence of at least one other terminal in the environment of said first terminal to perform an adjustment of the positions of the different terminals. This position adjustment advantageously allows the respective radio resources of the terminals to be pooled (combined) in order to create a virtual antenna array.

By creating such a virtual antenna array, it becomes possible to transmit and receive data streams to and from the satellite. The transmission of these data streams is carried out using the radio resources of these entities, so as to form directional transmission beams (also known as "beamforming").

In other words, creating said virtual antenna array from terminals located on the earth's surface provides a very efficient way of communicating with the satellite, even though the terminals would be deprived of it if they tried to communicate separately in a remote area without cell phone coverage.

It should be noted that the use of transmission beams as proposed by the invention may additionally, in certain circumstances, allow data to be transmitted with high spectral efficiency.

It is therefore understood that such an implementation is particularly advantageous in emergency situations.

In particular embodiments, the data processing method implemented by the first terminal may further comprise one or more of the following features, taken alone or in any technically feasible combination.

In particular embodiments, the method further comprises the steps of:
- obtaining configuration data of said terminals,
- selecting the first terminal from the set of terminals using the configuration data, the selection of the first terminal resulting from said first terminal satisfying a selection criterion referred to as "configuration criterion".

In particular embodiments, said method further comprises a step of providing to the user of the first terminal guidance data determined using a location of the first terminal and configuration data of the satellite, said guidance data being configured to guide said user of said first terminal in adjusting its position, so that an antenna of the first terminal is oriented towards the satellite, and wherein the transmission of guidance data to said at least one other terminal is performed once the position of the first terminal is adjusted.

In particular embodiments, the satellite configuration data comprises at least one of:
- a satellite orbit,
- a satellite communication coverage,
- a radio frequency band used by the satellite,
- a satellite direction,
- an elevation angle of the satellite.

In particular embodiments, the communication capacity data of said at least one other terminal comprises at least one of:
- an antenna design information, for example an antenna position in said at least one other terminal and/or an antenna direction,
- a radio frequency band used by said at least one other terminal,
- a Bluetooth and/or Wi-Fi support information.

In particular embodiments, the communication performance criterion consists in selecting one or more beams respectively associated with data transmission qualities above a given threshold.

In particular embodiments:
- the configuration data of the terminals comprise respective battery capacities of said terminals and the configuration criterion consists in selecting the terminal having the largest battery capacity,
- the configuration data of the terminals comprise respective computing powers of said terminals and the configuration criterion consists in selecting the terminal having the highest computing power,
- the configuration data of the terminals comprise respective transmission powers of said terminals and the configuration criterion consists in selecting the terminal having the highest transmission power.

In particular embodiments, the step of obtaining configuration data comprises receiving configuration data by Wi-Fi or Bluetooth communication from said at least one other terminal.

In particular embodiments, the set of terminals comprises a plurality of other terminals.

According to a second aspect, the invention relates to a data processing method implemented by a second terminal belonging to a set of terminals including at least one other terminal. Said method comprises a step of receiving guidance data from another terminal of said set of terminals, said guidance data being configured to guide the user of said second terminal in adjusting its position, so that said set of terminals forms a virtual antenna array configured to generate data transmission beams directed to a telecommunication satellite.

The data processing method implemented by the second terminal inherits the same advantages as mentioned above for the data processing method implemented by the first terminal.

In particular embodiments, the data processing method implemented by the second terminal may further comprise one or more of the following features, taken alone or in any technically feasible combination.

In particular embodiments, the method further comprises the steps of:
- obtaining configuration data of said terminals,
- selecting a terminal other than the second terminal from the set of terminals using the configuration data, the selection of said other terminal resulting from said other terminal satisfying a selection criterion referred to as "configuration criterion".

In particular embodiments:
- the configuration data of the terminals comprise respective battery capacities of said terminals and the configuration criterion consists in selecting the terminal having the largest battery capacity,
- the configuration data of the terminals comprise respective computing powers of said terminals and the configuration criterion consists in selecting the terminal having the highest computing power,
- the configuration data of the terminals comprise respective transmission powers of said terminals and the configuration criterion consists in selecting the terminal having the highest transmission power.

In particular embodiments, the step of obtaining configuration data comprises receiving configuration data by Wi-Fi or Bluetooth communication from said at least one other terminal.

In particular embodiments, the set of terminals comprises a plurality of other terminals.

According to a third aspect, the invention relates to a computer program comprising instructions which, when the program is executed by a computer, cause the computer to perform a data processing method implemented by the first terminal according to the invention or a data processing method implemented by the second terminal according to the invention.

This computer program can use any programming language and take the form of source code, object code or a code intermediate between source code and object code, such as a partially compiled form, or any other desirable form.

According to a fourth aspect, the invention relates to a computer-readable medium comprising instructions which, when executed by a computer, cause the computer to perform a data processing method implemented by the first terminal according to the invention or a data processing method implemented by the second terminal according to the invention.

The computer-readable medium can be any entity or device capable of storing the computer program. For example, the medium can include storage means such as a ROM, for example a CD ROM or a microelectronic circuit ROM, or magnetic storage means, for example a hard disk.

Alternatively, the computer-readable medium can be an integrated circuit in which the computer program is incorporated, the circuit being adapted to execute the data processing method or to be used in its execution.

According to a fifth aspect, the invention relates to a first terminal comprising means configured to perform a data processing method wherein at least one data transmission beam is selected according to the invention.

According to a sixth aspect, the invention relates to a second terminal comprising means configured to perform a data processing method wherein at least one message from another terminal is received according to the invention.

According to a seventh aspect, the invention relates to a data processing system comprising a first terminal according to the invention and at least one second terminal according to the invention.

In particular embodiments, the data processing system may further comprise one or more of the following features, taken alone or in any technically feasible combination.

In particular embodiments, the system further comprises said telecommunication satellite.

In particular embodiments, the telecommunication satellite orbit is a low earth orbit.

According to an eighth aspect, the invention relates to a communication method implemented by a data processing system according to the invention, said method comprising the steps of:
- performing a data processing method implemented by the first terminal according to the invention,
- performing a data processing method implemented by the second terminal according to the invention,
- transmitting data from the virtual antenna array to the telecommunication satellite using said at least one selected beam.

### Brief description of the drawings

Further features and advantages of the present invention will become apparent from the following description of certain embodiments thereof, given by way of illustration only, not limitation, with reference to the accompanying drawings in which:
- **FIG. 1** illustrates, in its environment, a particular embodiment of a data processing system according to the invention,
- **FIG. 2** illustrates an example of the hardware architecture of a terminal belonging to the system of FIG. 1,
- **FIG. 3** is a flowchart of a particular embodiment of a communication method implemented by the system of FIG. 1, said communication method comprising data processing methods implemented by each of the terminals of said system,
- **FIG. 4** illustrates an example of a first phase of transmitting messages in the method of FIG. 3 to adjust the position of a first terminal,
- **FIG. 5** illustrates an example of a second phase of transmitting messages in the method of FIG. 3 to adjust the position of terminals other than the first terminal.

### Description of embodiments

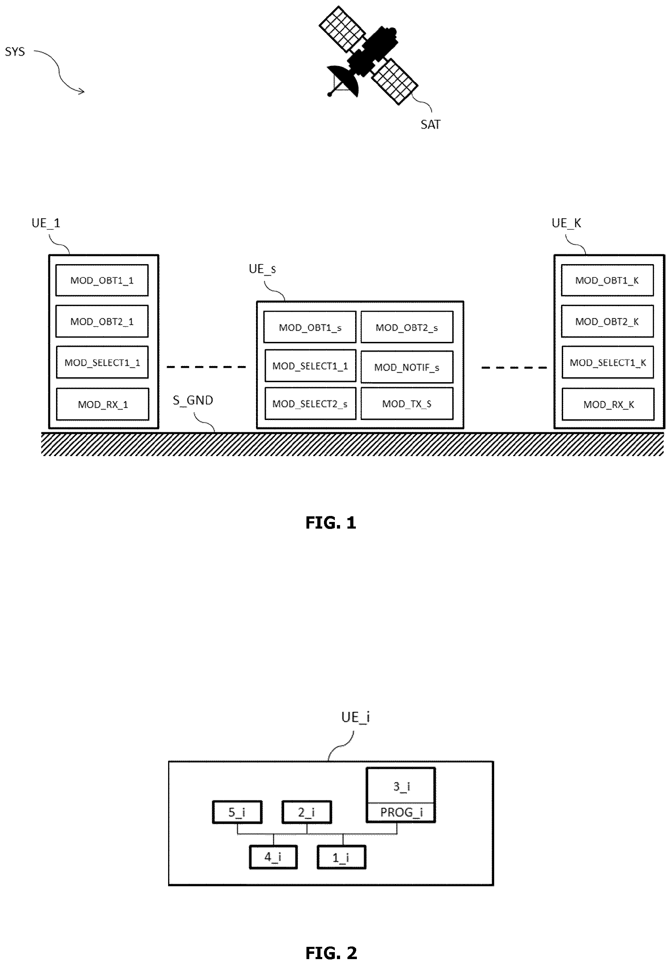

**FIG. 1** illustrates, in its environment, a particular embodiment of a data processing system SYS according to the invention.

As shown in FIG. 1, the data processing system SYS comprises a set of terminals UE_1,...,UE_K, each terminal UE_i (i being an integer between 1 and K) being equipped with Pi transmission/reception antennas A_i_1,...,A_i_Pi (K and Pi designating integers greater than 1).

Thus, and in accordance with the invention, it is considered that the data processing system SYS comprises a plurality of terminals located on the earth's surface S_GND. The number K of these terminals is not a limitation of the invention, as long as it is greater than 2. In the same way, no limitation is attached to the number Pi of transmission/reception antennas equipping a terminal UE_i, this number Pi possibly being equal to 1 or greater than 1.

A terminal UE_i corresponds, for example, to a cellular phone, such as a smartphone, a touch-sensitive tablet, a personal digital assistant, a personal computer, etc. Generally speaking, there is no limitation attached to the nature of a terminal UE_i as long as it is classically configured in a hardware and software manner to carry out communications on a telecommunication network using the antennas A_i_1,...,A_i_Pi.

For example, said telecommunication network is a 5G mobile network. These assumptions are not limiting, as the invention also applies to other types of wireless or mobile telecommunication networks, such as a 3G network, 4G network, or any future generation network (e.g. 6G network), etc.

In the embodiment described here, and as illustrated in FIG. 1, the data processing system SYS also comprises a telecommunication satellite SAT. Conventionally, said telecommunication satellite SAT is an artificial satellite placed in space for telecommunications purposes. In particular, it can be placed in a geostationary orbit, a Low Earth Orbit (LEO), an intermediate orbit (MEO) or a Molnia orbit.

For the rest of the description, one considers more specifically the scenario in which the terminals UE_1,...,UE_K are smartphones in possession of respective users, and equipped with antennas configured to communicate on a 5G mobile network. The users correspond to a group of people hiking in the mountains, more specifically in a remote mountainous area where no cell phone coverage is available. It is further assumed that this group is in an emergency situation as one of the users in the group requires medical assistance.

It should be noted that such a scenario is given for illustrative purposes only, and that it is possible to contemplate still other scenarios, whether for emergency situations or not. Generally speaking, the invention applies to terminals that can be simultaneously used at a given time and in a given geographical area. The extent of this geographical area is not a limitation of the invention, it being understood that the respective users of the terminals must be able to adjust their positions at respective fixed distances from each other in order to form a virtual antenna array VAA, as described in more detail later.

Each terminal UE_i is configured to carry out processing enabling all the terminals UE_1,...,UE_K to jointly form said virtual antenna array VAA capable of communicating with the satellite SAT using one or more data transmission beams, by implementing a data processing method according to the invention.

It should be noted that the data processing methods implemented by the terminals UE_1,...,UE_K are not all identical to each other. In particular, an appropriately selected terminal UE_s (s being an integer between 1 and K) implements a data processing method distinct from those implemented by the other terminals of said set of terminals. These aspects are described in more detail below through different embodiments of the methods involved. In any case, the general hardware architectures of the terminals UE_1,...,UE_K all have similar features which are now described.

**FIG. 2** illustrates an example of the hardware architecture of a terminal UE_i belonging to the system SYS of FIG. 1.

As shown in Figure 2, the terminal UE_i has the hardware architecture of a computer. Thus, the terminal UE_i comprises, in particular, a processor 1_i, a random access memory 2_i, a read only memory 3_i and a non-volatile memory 4_i. It also comprises communication means 5_i.

The read-only memory 3_i of the terminal UE_i constitutes a recording medium in accordance with the invention, which is readable by the processor 1_i and on which is recorded a computer program PROG_i in accordance with the invention, comprising instructions for the execution of steps of the data processing method. The program PROG_i defines functional modules of the terminal UE_i, which are based on or control the aforementioned hardware elements 1_i to 5_i of the terminal UE_i. These functional modules are illustrated in Figure 1 in a non-limiting manner, and are described in more detail below with reference to different embodiments of the data processing method.

The communication means 5_i include in particular a 5G radio communication interface which integrates the antennas A_i_1, A_i_2, ..., A_i_Pi mentioned previously. Furthermore, the communication means 5_i are also configured to allow the terminal UE_i to exchange (transmit/receive) data over short distances with one or more other terminals UE_j (j being an integer different from i, i.e. j≠i). For this purpose, in the embodiment described here, the communication means 5_i rely on a Bluetooth communication interface.

Considering such a Bluetooth communication interface for exchanging data over short distances is, however, only one implementation variant of the invention, and nothing excludes considering, in addition or as an alternative, other interfaces, wired or non-wired, such as for example a Wi-Fi interface, more particularly a Wi-Fi Direct interface.

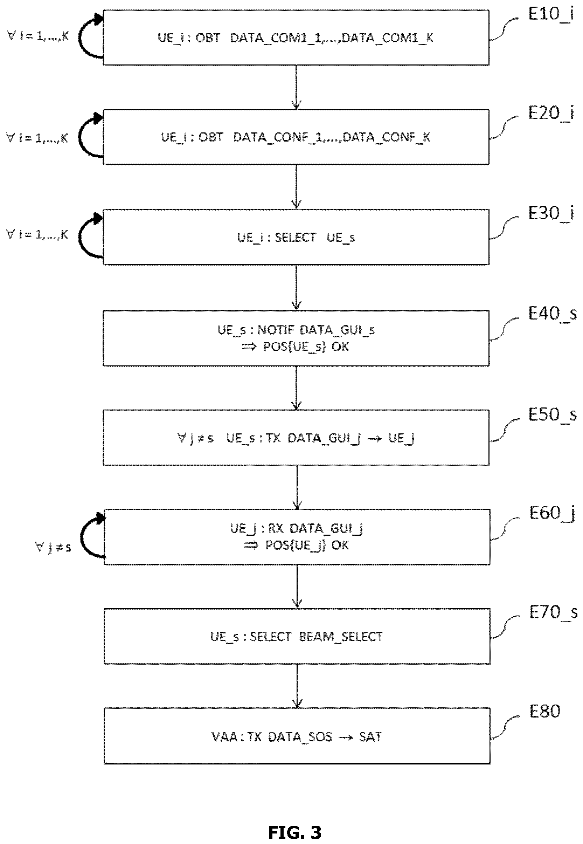

**FIG.** 3 is a flowchart of a particular embodiment of a communication method implemented by the system SYS of FIG. 1. Said communication method encompasses the data processing methods implemented by each of the terminals UE_1,...,UE_K of Fig. 2.

As a reminder, we consider here the scenario of an emergency situation where one of the users of the terminals UE_1,...,UE_K requires medical assistance, while the users of said terminals UE_1,...,UE_K are in a remote mountain area. In other words, said users would like to contact the emergency services even though they have no cell phone coverage.

For the rest of the description of the communication method, it is also considered that the programs PROG_1,..., PROG_K are integrated into the same software application APP stored in each of the non-volatile memories 4_1,..., 4_K of the terminals UE_1,..., UE_K. This APP application is therefore configured to coordinate the various steps implemented by each of the terminals UE_1,..., UE_K and corresponds, in the example considered here, to an application specifically designed to put people requiring assistance in communication with emergency services.

It should be noted that the communication method is described here considering that the application APP has been downloaded and activated by each of the users of the terminals UE_1,..., UE_K before the start of the mountain hike. However, this does not preclude the possibility of other variants, such as the following, in any technically feasible combination:
- the application APP is downloaded before the start of the hike, but is activated only when an incident occurs, this activation being subject or not to a step of said communication method;
- the application APP is downloaded before the start of the hike by a single terminal UE_i, and shared with the other terminals UE_j (j≠i) via a short-distance data transmission (Bluetooth in this example), this sharing being subject or not to a step of the communication method.

Nothing excludes considering embodiments in which no application common to the terminals UE_1,..., UE_K is used, each of them being then specifically configured to implement its own data processing method.

As shown in FIG. 3, the communication method comprises firstly, for each terminal UE_i, a step E10_i of obtaining first communication capacity data DATA_COM1_1,...,DATA_COM1_K from each of the terminals UE_1,...,UE_K. Said step E10_i is part of the data processing method implemented by the terminal UE_i and is performed by a first obtaining module MOD OBT1_i equipping said terminal UE_i.

More particularly, in the present embodiment, the communication capacity data obtained in this step E10_i are Bluetooth support information useful for the establishment of connections between the terminals UE_1,...,UE_K, so that they can exchange data between them over short distances in a synchronised manner.

No limitation is attached to the way in which said first communication capacity data DATA_COM1_1,...,DATA_COM1_K are obtained by each terminal UE_i. For example, with respect to data DATA_COM1_j (j≠i), this obtaining may be based on a communication mechanism of the type "transmission of a request/reception of a response to a request" executed by said terminal UE_i. According to another example, said terminal UE_i may broadcast its own first communication capacity data DATA_COM1_i spontaneously (i.e. without receiving a request), for example periodically, the other terminals UE_j receiving said data DATA_COM1_i.

Of course, each terminal UE_i is already in possession of its own first communication capability data DATA_COM1_i, which are for example stored in the non-volatile memory 4_i, so that obtaining this data DATA_COM1_i by the terminal UE_i then simply consists in accessing the same.

It is important to note that step E10_i is described here as part of the communication method. However, nothing excludes the possibility that each terminal UE_i obtains the first communication capacity data DATA_COM1_j before the start of the communication method, and stores them for example in its non-volatile memory 4_i so that they can be used by the application APP.

Once the terminals UE_1,...,UE_K are connected to each other in a synchronized manner via Bluetooth, due to the execution of steps E10_1,...,E10_K, the communication method also comprises, for each terminal UE_i, a step E20_i of obtaining configuration data DATA_CONF_1,...,DATA CONF_K of each of the terminals UE_1,...,UE_K. Said step E20_i is part of the data processing method implemented by the terminal UE_i and is performed by a second obtaining module MOD_OBT2_i equipping said terminal UE_i.

The execution of step E20_i is carried out here via the Bluetooth connection (or alternatively via a Wi-Fi connection when this implementation option is considered) between the terminals UE_1, ..., UE_K, and according to technical considerations similar to those described above for step E10_i (request/response to requests, periodic transmission). Furthermore, step E20_i is also described here as part of the communication method. However, nothing excludes the possibility that the configuration data DATA_CONF_1,...,DATA_CONF_K are obtained before the implementation of the communication method.

The configuration data DATA CONF_1,...,DATA CONF_K shared between the terminals UE_1,...,UE_K are used to select one of them to perform particular steps of the communication method. For example, the configuration data DATA_CONF_1,...,DATA_CONF_K may comprise respective battery capacities of said terminals UE_1,...,UE_K, and/or respective computing powers of said terminals UE_1,...,UE_K, and/or respective transmission powers of said terminals UE_1,...,UE_K.

More particularly, in the present embodiment, the communication method also comprises, for each terminal UE_i, a step E30_i of selecting a terminal from said terminals UE_1, ..., UE_K using the configuration data DATA_CONF_1, ..., DATA_CONF_K, and it being understood that the selected terminal is the one satisfying a criterion referred to as "configuration criterion CRIT_CONF". Said step E30_i is part of the data processing method implemented by the terminal UE_i and is carried out by a first selection module MOD_SELECT1_i equipping said terminal UE_i.

With regard to the elements described above concerning the configuration data DATA_CONF_1,...,DATA CONF_K, the following particular examples of implementation may be contemplated:
- the configuration data DATA_CONF_1,...,DATA_CONF_K of the terminals UE_1,...,UE_K comprise respective battery capacities of said terminals UE_1,...,UE_K and the configuration criterion CRIT_CONF consists in selecting the terminal with the largest battery capacity,
- the configuration data DATA_CONF_1,...,DATA_CONF_K of the terminals UE_1,...,UE_K comprise respective computing powers of said terminals UE_1,...,UE_K and the configuration criterion CRIT_CONF consists in selecting the terminal having the highest computing power,
- the configuration data DATA_CONF_1,...,DATA_CONF_K of the terminals UE_1,...,UE_K comprise the respective transmission powers of said terminals UE_1,...,UE_K and the configuration criterion CRIT_CONF consists in selecting the terminal with the highest transmission power.

For the rest of the description, it is considered for illustrative purposes only that the terminal selected by the terminals UE_1,...,UE_K, as a result of the execution of steps E30_1, ..., E30_K, is the terminal UE_s (s being an integer between 1 and K). It should be noted that in the embodiment considered here, the terminals UE_1,...,UE_K all achieve the same selection result, i.e. the terminal UE_s. This results from the fact that the terminals UE_1,...,UE_K all use the same configuration data DATA_CONF_1,...,DATA_CONF_K and the same selection criterion CRIT_CONF.

The selected terminal UE_s will then act as a reference for the other terminals, so that the respective positions of all the terminals make it possible to form a virtual antenna array VAA configured to generate data transmission beams that can be used to communicate with the satellite SAT.

However, it should be noted that the process of selecting the terminal UE_s as just described is only one variant of the invention, and nothing excludes the possibility of still other variants.

For example, only one of the terminals UE_1,...,UE_K can be in charge of collecting the configuration data DATA_CONF_1,...,DATA_CONF_K, and determining which terminal satisfies the configuration criterion CRIT_CONF. Once the appropriate terminal has been identified, its identity can be communicated to the other terminals.

It is also possible to envisage that the selection is carried out without using any configuration data. For example, the selection of a terminal from the set of terminals UE_1,...,UE_K can be carried out randomly (the selection criterion CRIT_CONF being therefore a random selection criterion). However, it is understood that such a random selection can only be implemented by one of the terminals of the set of terminals UE_1,..., UE_K, for example a terminal designated jointly by the respective users of the terminals UE_1,..., UE_K, or even the terminal being the only one to have the APP application when this this case applies.

It should also be noted that the selection of a terminal from the terminals UE_1,...,UE_K (and thus obtaining configuration data DATA_CONF_1, ..., DATA_CONF_K when applicable) is described as part of the communication method. However, nothing excludes the possibility that this selection is performed before the implementation of the communication method.

Once the terminal UE_s has been selected, the communication comprises a step E40_s of providing to the user of said terminal UE_s guidance data DATA_GUI_s. Said guidance data DATA_GUI_s are configured to guide said user of said terminal UE_s in adjusting its position (i.e. the position of the terminal UE_s), so that an antenna of the terminal UE_s is oriented towards the satellite SAT. Said step E40_s is part of the data processing method implemented by the terminal UE_s and is carried out by a notification module MOD_NOTIF_s equipping said terminal UE_s.

The guidance data DATA_GUI_s are determined using a location LOC_s of the terminal UE_s as well as configuration data DATA_CONF_SAT of the satellite SAT.

The nature of the guidance data DATA_GUI_s is not a limitation of the invention, as long as they enable the user guidance function to be carried out. For example, they may be adapted to trigger the output of guidance information in the form of audio messages (e.g. voice messages) and/or text and/or video messages displayed through speaker(s) and/or screen(s) and/or any known and appropriate user interface provided by the terminal, etc.

The location LOC_s of the terminal UE_s corresponds for example to a GPS location.

As regards the configuration data DATA_CONF_SAT of the satellite SAT, they comprise for example at least one of:
- a satellite orbit,
- a satellite communication coverage,
- a radio frequency band used by the satellite,
- a satellite direction,
- an elevation angle of the satellite.

In general, no limitation is attached to the way the terminal UE_s obtains the data DATA_CONF_SAT from the satellite SAT. For example, it is stored in whole or in part in the non-volatile memory 4_s of the terminal UE_s before the communication method is implemented. Moreover, nothing excludes that part of the configuration data DATA_CONF_SAT of the satellite SAT is determined (calculated) by the terminal UE_s itself from other configuration data DATA_CONF_SAT of the satellite SAT that have been previously stored.

The user of the terminal UE_s thus becomes aware of said guidance data DATA_GUI_s, and adjusts the position of said terminal UE_s (reference sign "POS{UE_s} OK" in FIG. 3). Once this is done (which may for example be notified by sending further messages to the other terminals), the communication method comprises a step E50_s of transmitting guidance data DATA_GUI_j to the other terminals UE_j (j≠s). Said guidance data DATA_GUI_j are configured to guide the users of said other terminals UE_j in adjusting their respective positions, so that the set of terminals UE_1,...,UE_K forms the virtual antenna array VAA configured to generate data transmission beams directed to the satellite SAT. Said step E50_s is part of the data processing method implemented by the terminal UE_s and is carried out by a transmission module MOD_TX_s equipping said terminal UE_s.

The guidance data DATA_GUI_j are determined using second communication capacity data DATA_COM2_j of the terminals UE_j other than the terminal UE_s (j≠s).

In the same way as described above for the guidance data DATA_GUI_s, the nature of the guidance data DATA_GUI_j is not a limitation of the invention, as long as they enable the user guidance function to be carried out.

The second communication capability data DATA_COM2_j of a terminal UE_j (j≠s) includes for example at least one of:
- an antenna design information, for example an antenna position in said terminal UE_j and/or an antenna direction,
- a radio frequency band used by said other terminal (e.g. 3.4 - 3.8 GHz for antennas configured to communicate on a 5G mobile network).

The obtaining of the second communication capacity data DATA_COM2_j of the terminals UE_j (j≠s) by the terminal UE_s does not constitute a limitation of the invention either. As such, the technical provisions regarding the obtaining of the first communication capacity data DATA_COM1_1,...,DATA_COM1_K apply here in a similar manner for said second communication capacity data DATA_COM2_j of the terminals UE_j (j≠s). In particular, nothing excludes the possibility that the obtaining of the second communication capacity data DATA_COM2_j is carried out:
- prior to the implementation of the communication method, or
- during step E10_s, or
- during step E20_s of obtaining configuration data DATA_CONF_1,...,DATA_CONF_K (communication capacity data can indeed be seen as a specific category of configuration data), or
- in a dedicated step prior to the step E50_s of transmitting the guidance data DATA_GUI_j.

As already indicated, the purpose of providing and transmitting guidance data is to guide the users of said terminals UE_1,...,UE_K in adjusting their respective positions, so that said set of terminals UE_1,...,UE_K forms a virtual antenna array VAA configured to generate data transmission beams directed to the satellite SAT. The aim is therefore to take advantage of the presence of the plurality of terminals UE_1,...,UE_K to form said virtual antenna array VAA in order to transmit and receive data streams to and from the satellite SAT. The transmission of these data streams is carried out using the radio resources of these entities, namely the antennas fitted to them, so as to form directional transmission beams (also known as "beamforming").

In the present embodiment, the communication method then comprises steps E60_j (j≠s) in which the guidance data DATA_GUI_j are respectively received by the terminals UE_j. Said steps E60_j are part of the data processing methods implemented by the terminals UE_j and are executed by reception modules MOD_RX_j equipping respectively said terminals UE_j.

Upon receiving said guidance data DATA_GUI,j, the users of the terminals UE_j adjust their position accordingly (reference sign "POS{UE_j} OK" in FIG. 3).

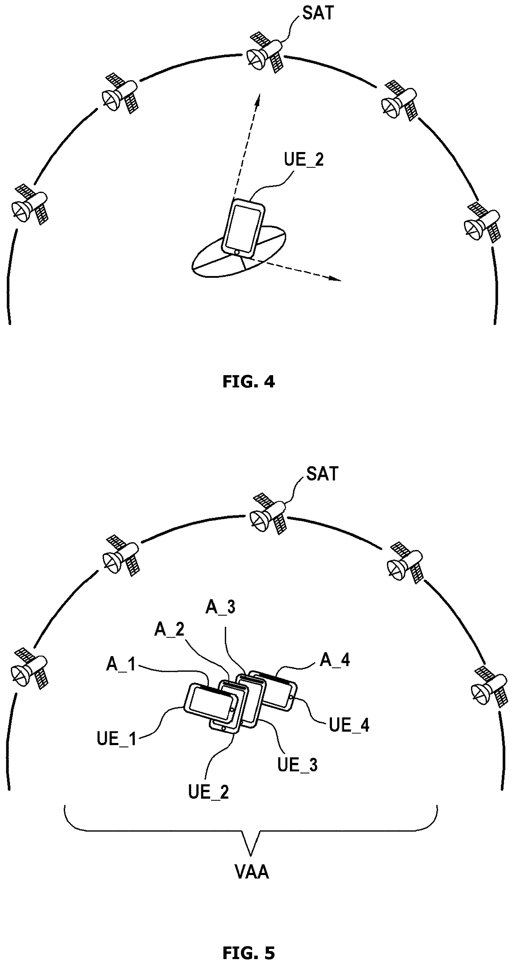

In other words, in the present embodiment, the formation of the virtual antenna array VAA is carried out in two phases, namely a first phase of adjustment of the position of the selected terminal UE_s, then an adjustment of the positions of the other terminals UE_j when the adjustment of the position of the terminal UE_s has been completed. **FIGS. 4** and **5** illustrate these two phases in a non-limiting manner. More particularly, in these FIGS. 4 and 5, it is considered that the number K of terminals is equal to 4, and that each of said terminals UE_i (i ranging from 1 to 4) comprises a single antenna A_i. It is further considered that the terminal selected among said terminals UE_i is the terminal UE_2. Therefore, FIG. 4 shows the implementation of said first phase (only the UE_2 terminal is shown, and the satellite SAT is shown several times in different positions on its orbit). FIG. 5 illustrates the implementation of the second phase. It should be noted that the terminals UE_1, UE_3, UE_4 are positioned with respect to the terminal UE_2 to form the virtual antenna array VAA, and in particular so that their respective antennas A_1, A_3, A_4 have a polarisation direction identical to that of the antenna A_2 of the terminal UE_2. In practice, the antennas A_1, A_2, A_3, A_4 are parallel to each other in this example. Due to the position of the antennas A_i within each terminal UE_i, this implies in particular that said terminals UE_i are not all arranged in the same way within said virtual antenna array VAA.

It should be noted that the first and second phases as considered in the present embodiment are not limiting of the invention, and nothing excludes considering other alternatives for guiding the users of the terminals UE_i to form the virtual antenna array VAA. For example, it may be possible to group initially the terminals appropriately around the selected terminal UE_s to form the virtual antenna array VAA, and then to orientate this virtual antenna array VAA so that it is configured to generate data transmission beams directed to the satellite SAT.

According to another alternative, the terminal UE_s may be selected and positioned before the implementation of the communication method, so that only the positions of the other terminals UE_j have to be adjusted.

It is also possible to envisage an embodiment where the position of the selected terminal UE_s does not need to be adjusted because the terminal UE_s is already correctly positioned.

Generally speaking, the skilled person knows the technical considerations to be taken into account (i.e. distances between said terminals, positions of the antennas of said terminals) to form a virtual antenna array VAA oriented in a given direction.

Back to FIG. 3, and once the positions of the terminals UE_1,...,UE_K have been adjusted, the communication method comprises a step E70_s of selecting at least one data transmission beam BEAM_SELECT for communicating with the satellite SAT from beams that the virtual antenna array VAA is configured to (designed to) generate. Said at least one selected beam BEAM_SELECT is more particularly the one satisfying a selection criterion referred to as "communication performance criterion CRIT_COM". Said step E60_s is part of the data processing method implemented by the selected terminal UE_s and is performed by a second selection module MOD_SELECT2_s equipping said terminal UE_s.

In practice, the technology of generating beams by a virtual antenna array VAA is based on technical considerations known to the skilled person. In particular, the skilled person knows the techniques of beamforming and beamsteering to respectively obtain a specific shape of beams and to modify the orientation of these beams so that they point in a given direction.

Thus, in the embodiment described here, the beams are generated by the virtual antenna array VAA using a technique consisting of generating a baseband signal by the selected terminal UE_s, and transmitting this signal to the terminals UE_j for emission by the latter with appropriate phase shifts. This technique is still known as "DSP based phase shifting" and allows beams to be generated and their orientations to be changed.

However, this does not exclude the use of another technique for generating beams, such as a technique which modifies the shape and orientation of beams by selectively activating/deactivating antennas of the virtual antenna array VAA (a technique still known as "Switched Array Antenna"), or a technique which modifies the shape and orientation of beams by applying a specific precoding matrix (a technique still known as "Beamforming by Precoding").

The skilled person also knows how to implement a selection of one or more beams to communicate with a target, in this case the satellite SAT. For example, the communication performance criterion CRIT_COM may consist in selecting one or more beams respectively associated with data transmission qualities above a given threshold. This selection may be implemented from a plurality of simultaneously generated beams or by using a beam whose direction is iteratively changed. The evaluation of the transmission qualities of these beams can be performed according to any known method (e.g. CSI method using CSI-RS or SSB pilot signals).

It should be noted that the configuration in which the satellite SAT has a low earth orbit is advantageous in that it makes it possible to limit the number of beams that can be used to communicate with said satellite SAT. Accordingly, the selection procedure of step E60_s is simplified.

Once the selection of said at least one beam BEAM_SELECT has been performed by the terminal UE_s, the communication method comprises a step E80 of transmitting data DATA_SOS to the satellite SAT using said at least one selected beam BEAM_SELECT. This step E80 is thus implemented by the virtual antenna array VAA.

In the scenario under consideration here, the data DATA_SOS transmitted corresponds to an emergency message. No limitation is attached to the nature of said message, which can be text, voice, video, etc.

It is important to note that the forming of said virtual antenna array VAA and the selection of said at least one beam BEAM_SELECT also allows the users of the terminals UE_1,...,UE_K to receive radio messages, such as a response to said emergency message.

Furthermore, the invention has been described so far considering that the satellite SAT is included in the data processing system SYS. However, the invention also covers the possibility that only the terminals UE_1,...,UE_K form said system SYS.

## Claims

1. A data processing method implemented by a first terminal belonging to a set of terminals including at least one other terminal, said method comprising the steps of:
- transmitting (E50_s) guidance data to said at least one other terminal, said guidance data being configured to guide users of said terminals in adjusting their respective positions, so that said set of terminals forms a virtual antenna array configured to generate data transmission beams directed to a telecommunication satellite,
- once the positions of the terminals are adjusted, selection (E70_s) of at least one data transmission beam to communicate with the satellite from beams that the virtual antenna array is capable of generating, said at least one selected beam satisfying a selection criterion referred to as "communication performance criterion".

2. The method according to claim 1, the method further comprising the steps of:
- obtaining configuration data of said terminals,
- selecting the first terminal from the set of terminals using the configuration data, the selection of the first terminal resulting from said first terminal satisfying a selection criterion referred to as "configuration criterion".

3. The method according to any one of claims 1 to 2, said method further comprising a step of providing to the user of the first terminal guidance data determined using a location of the first terminal and configuration data of the satellite, said guidance data being configured to guide said user of said first terminal in adjusting its position, so that an antenna of the first terminal is oriented towards the satellite, and wherein the transmission of guidance data to said at least one other terminal is performed once the position of the first terminal is adjusted.

4. The method according to claim 3, wherein the satellite configuration data comprises at least one of:
- a satellite orbit,
- a satellite communication coverage,
- a radio frequency band used by the satellite,
- a satellite direction,
- an elevation angle of the satellite.

5. The method of any one of claims 1 to 4, wherein the guidance data transmitted to said at least one other terminal are determined using communication capacity data of said at least one other terminal, said communication capacity data comprising at least one of:
- an antenna design information, for example an antenna position in said at least one other terminal and/or an antenna direction,
- a radio frequency band used by said at least one other terminal,
- a Bluetooth and/or Wi-Fi support information.

6. The method according to any one of claims 1 to 5, wherein the communication performance criterion consists in selecting one or more beams respectively associated with data transmission qualities above a given threshold.

7. A data processing method implemented by a second terminal belonging to a set of terminals including at least one other terminal, said method comprising a step of receiving (E60_j) guidance data from another terminal of said set of terminals, said guidance data being configured to guide the user of said second terminal in adjusting its position, so that said set of terminals forms a virtual antenna array configured to generate data transmission beams directed to a telecommunication satellite.

8. The method according to claim 7, the method further comprising the steps of:
- obtaining configuration data of said terminals,
- selecting a terminal other than the second terminal from the set of terminals using the configuration data, the selection of said other terminal resulting from said other terminal satisfying a selection criterion referred to as "configuration criterion".

9. The method according to any one of claims 1 to 6 combined with claim 2 or according to claim 8, wherein:
- the configuration data of the terminals comprise respective battery capacities of said terminals and the configuration criterion consists in selecting the terminal having the largest battery capacity, or
- the configuration data of the terminals comprise respective computing powers of said terminals and the configuration criterion consists in selecting the terminal having the highest computing power.

10. The method according to any one of claims 1 to 6 combined with claim 2 or according to claim 8 or according to claim 9 combined with claim 8, wherein the step of obtaining configuration data comprises receiving configuration data by Wi-Fi or Bluetooth communication from said at least one other terminal.

11. The method according to any one of claims 1 to 10, wherein the set of terminals comprises a plurality of other terminals.

12. A computer program comprising instructions which, when the program is executed by a computer, cause the computer to perform:
- a method according to any one of claims 1 to 6 or to any one of claims 9 to 11 wherein said method is implemented by the first terminal, or
- a method according to any one of claims 7 to 8 or to any one of claims 9 to 11 wherein said method is implemented by the second terminal.

13. A computer-readable medium comprising instructions which, when executed by a computer, cause the computer to perform:
- a method according to any one of claims 1 to 6 or to any one of claims 9 to 11 wherein said method is implemented by the first terminal, or
- a method according to any one of claims 7 to 8 or to any one of claims 9 to 11 wherein said method is implemented by the second terminal.

14. A terminal comprising means configured to perform a method according to any one of claims 1 to 6 or to any one of claims 9 to 11 wherein said method is implemented by the first terminal.

15. A terminal comprising means configured to perform a method according to any one of claims 7 to 8 or to any one of claims 9 to 11 wherein said method is implemented by the second terminal.

16. A data processing system comprising a first terminal according to claim 14 and at least one other terminal according to claim 15.

17. The system according to claim 16, the system further comprising said telecommunication satellite.

18. The system according to claim 17, wherein the telecommunication satellite orbit is a low earth orbit.

19. A communication method implemented by a data processing system according to any one of claims 16 to 18, said method comprising the steps of:
- performing a method according to any one of claims 1 to 6 or to any one of claims 9 to 11 wherein said method is implemented by the first terminal,
- performing a method according to any one of claims 7 to 8 or to any one of claims 9 to 11 wherein said method is implemented by the second terminal,
- transmitting data from the virtual antenna array to the telecommunication satellite using said at least one selected beam.
